# EUROPEAN PATENT SPECIFICATION

(11) **EP 3 799 611 B1**
(45) Date of publication and mention of the grant of the patent: **13.09.2023**
(21) Application number: 19763200.3
(22) Date of filing: 08.03.2019
(51) Int. Cl.: F03B 13/24, F03B 13/18

(54) **A SYSTEM FOR PRODUCING ELECTRIC CURRENT BY USING SEA/OCEAN WAVES**
SYSTEM ZUR ERZEUGUNG VON ELEKTRISCHEM STROM DURCH DIE NUTZUNG VON MEERES-/OZEANWELLEN
SYSTÈME DE PRODUCTION DE COURANT ÉLECTRIQUE PAR L'UTILISATION DES VAGUES DE LA MER/OCÉAN

(30) Priority: 09.03.2018 RO 201800170
(43) Date of publication of application: 07.04.2021
(73) Proprietor: Popa, Petre, Bucuresti (RO)
(72) Inventor: Popa, Petre, Bucuresti (RO)
(74) Representative: Vasilescu, Raluca
(86) International application number: PCT/RO2019/000007
(87) International publication number: WO 2019/172793

(56) References cited:
- WO-A1-2016/058518
- CN-A- 101 285 450
- GB-A- 2 075 610
- JP-A- 2002 303 242
- US-A- 692 424
- US-A- 1 389 445
- US-A1- 2007 130 929

## Description

### Field of the invention

The invention is directed to a system adapted for producing electricity using pressurized air obtained from sea or oceanic waves energy

### Background art.

US 2007/0130929 A1 discloses a machine and a process for generating compressed air by using the energy of sea waves. US 2007/0130929 A1 uses a floating platform with its fixture and takes advantage of its up and down movements to compress air in both directions for absorbing the energy of the waves in a direct bidirectional pump having a single piston. The kinetic energy of the waves is used to generate compressed air Thus, the output of the machine and process is the compressed air.

The person skilled in the art knows that the compressed air outputted by the machine disclosed by US 2007/0130929 A1 can be further used where necessary.

### The disadvantages of prior art

The person skilled in the art knows that, in general, the values of the pressure of the compressed air obtained by machineries using the energy of sea waves- such as the ones disclosed by US 2007/0130929 A1, are situated in the lowest range of values of the compressed air pressure for the following reason: in general the functioning of an air pump/turbine is characterized by two parameters:
- The volume of air flow generated (air flow debit)
- The air pressure generated;

In US 2007/0130929 A1, there is a turbine which is using as input air flow at low pressure generated by the floaters acting on the air pumps and the output is represented by a smaller volume of airflow at a higher pressure. High air pressure is needed in order to be able to efficiently rotate the other turbine of the electric generator. The energy harvested from the movement of the see/ocean waves is directly proportional with the volume of air flow generated by the floaters acting on the air pumps. The higher said volume, the higher is the energy harvested. This higher volume of energy harvested is the equivalent of a higher air flow at a higher pressure.

The teaching of US 2007/0130929 A1 is limited only to a solution for harvesting energy from see/ocean waves.

Consequently, to the person skilled in the art, the teaching of US 2007/0130929 A1 has the disadvantage that it cannot be used when the floating platform is situated in sea/ocean ambientes where there is a high fluctuation of the sea waves energy and thus there is a high probability that many times the sea waves energy is at the lowest values.

### Problem to be solved by the invention

The problem to be solved by the invention is to design a system adapted for producing electricity using pressurized air obtained from sea or oceanic waves energy capable of increasing the values of the pressurized air obtained from said sea or oceanic waves energy such that to be capable of generating electricity based on said increased values of the pressurized air irrespective of the fluctuations of the sea or oceanic waves energy.

### Description

The system according to the invention is composed of four main components, each one containing one or more parts. The system according to the invention is presented herein, little limited but elaborated enough, to the extent of having its functionality understood very well.

The four main components are as follows:
- a first component (I), which is mounted on a metal shaft fixed on the sea/ocean floor at a convenient distance from the shore, slope and depth of the water in relation with the waves size, the first component (I) comprising the one or more Floater Pumps (1-4) connected with a second component (II), the second component (II) consisting in a Double Spiralled Air Duct (5),
- a third component (III) comprising a General Air Reservoir (6), the General Air Reservoir (6) hosting inside:
   - a Rotative Pump for High Air Pressure PRIPA (9), the Rotative Pump for High Air Pressure (9) comprising an Auxiliary Turbine (9b),
   - a High Air Pressure Reservoir (8),
   - an Air-Drying Chamber (7),
   - a Smoothing Air Flowing Chamber (6a) connected to two Split Pressure Ducts (6d, 12), namely a Split Feeding Air Pressure Duct (6d), and a Supplementary Air Duct for Public Use (12),
- a fourth component (IV) comprising a first Electric Current Generator (10) and a second Electric Current Generator (11), the first Electric Current Generator (10) and the second Electric Current Generator (11) connected to the third component (III) through the Feeding Air Pressure Duct (6d) and the first Electric Current Generator (10) and the second Electric Current Generator (11) connected separately to the Supplementary Air Duct for Public Use (12) as a Supplementary Source of Energy,

The one or more Floater Pumps (1) which at the coming or movements of the sea or ocean waves towards the coastal line, moves up/down on respectives Floater Pump Shafts 2 fixed on the ocean floor, placed at a chosen distance away from the shore, based on the geological conditions (slop, shape) and the usual sea/ocean waves' size. Each Floater Pump comprises one or more Air Pumps (4), each Air Pump (4) with its respective Air Pump shaft (3), the one or more Air Pumps (4) are activated during the Floater Pump's (1-4) up/down's movement having the potential to produce air which is inserted through an Admission Duct 4d and an Air Valve 4c in both up/down directions and through the Double Spiralled Air Duct 5 into the General Air Reservoir 6.

The Double Spiralled Air Duct 5 comprises a first spiralled Air Duct, and a second spiralled Air Duct, the first spiralled Air Duct provided with a one way air valve mounted at the bottom of said first spiralled Air Duct at the entrance in the General Air Reservoir 6. The High Air Pressure Reservoir 8 is mounted inside the General Air Reservoir 6.

The General Air Reservoir is provided at the base with an Emptying Tank 7b.

The pressurized air insertion from General Air Reservoir 6 into the High Air Pressure Reservoir 8 is obtained through a pump called - Rotative Pump Air of High Air Pressure 9, in short PRIPA 9. From the PRIPA 9, the air passes through an Air-Drying Chamber 7 and the Smoothing Air Flowing Chamber 6a further into two Electric Current Generators 10, 11 by way of two Split Pressure Ducts 6d, 12, said two Split Pressure Ducts 6d, 12 being the Feeding Air Pressure Duct 6d and the Supplementary Air Duct for Public Use 12.

Part of the pressurized air is used for producing electrical energy, while other part is used for industrial, commercial and public use.

### Advantages of the invention

The invention has the following advantages:
(i) It produces electricity using pressurized air obtained from sea or oceanic waves energy irrespective of the fluctuations of the sea or oceanic waves energy,
(ii) It does not pollute the environment, on the contrary is very environment friendly: the system has 0 % pollution, 0 % toxicity, 0 % radioactivity,
(iii) It can function non-stop day and night,
(iv) It produces free electrical energy from a 100% free energy source, for the whole planet Earth,
(v) It offers an easy access for maintenance,
(vi) It adjusts to the environment, as if can be used for a wide range of sea or oceanic waves energy

### COMPONENTS OF THE SYSTEM:

| | |
|---|---|
| 1-4 One or more Floater Pumps 1-4 | |
| 1. - One or more Floaters | Fig. 1 |
| 2. - Floater Pump Shafts for each respective Floater Pump 1 | Fig. 1 |
| 2a - Guidance tongue for each respective Floater Pump 1 | Fig. 1 |
| 2b. - Guiding groove for each respective Floater Pump 1 | Fig. 1 |
| 3. - Air Pump shaft for each respective Air Pump 4 | Fig. 1 |
| 4. - one or more Air Pumps | Fig. 1 |
| For each Air Pump 4: | |
| 4a. - Air Pump Cylinder | Fig. 1 |
| 4b. - Air Pump Piston | Fig. 1 |
| 4c. - Air Valve | Fig. 1 |
| 4d. - Admission Duct | Fig. 1 |
| 5. - Double Spiralled Air Duct | Fig. 1 |
| 5a. - One way Air Valve | Fig. 1 |
| 6. - General Air Reservoir | Fig. 1 |
| 6a. Smoothing Air Flowing Chamber | Fig. 1, 2 |
| 6b. - Pressure Valve | Fig. 1 |
| 6c. - One Way Pressure Valve | Fig. 1 |
| 6d. - Feeding Air Pressure Duct | Fig. 1 |
| 7. - Air-Drying Chamber | Fig. 1, 2 |
| 7a. - Air Drying Coil | Fig. 1, 2 |
| 7b. -Emptying Tank | Fig. 1 |
| 7c. - Draining Valve | Fig. 1 |
| 7d. - "In" Duct for Air- Drying Chamber | Fig. 2 |
| 7e. - "Out" Duct for Air -Drying Chamber | Fig. 2 |
| 8. - High Air Pressure Reservoir | Fig. 1 |
| 8a. - Air Insertion Orifice of the High Air Pressure Reservoir | Fig. 3 |
| 8b. - First Visitation Window of the High Air Pressure Reservoir | Fig. 1 |
| 8c. - Second Visitation Window of the High Air Pressure Reservoir | Fig. 1 |
| R3 - High Air Pressure Reservoir's Orifice for air injection | Fig. 4, Fig. 2 |
| 9. Rotative Pump for High Air Pressure PRIPA | Fig. 1,2,3,4,5 |
| 9a Turbine for Air Insertion | Fig. 2, 3, 4 |
| 9b. Auxiliary Turbine | Fig. 4, Fig.5 |
| 9bi. Tooth of the Auxiliary Turbine | Fig. 4, Fig.5 |
| 9c. Housing of the Auxiliary Turbine | Fig. 4, Fig.5 |
| 9ci. - Orifice for Air Insertion of the Auxiliary Turbine | Fig. 4 Fig.5 |
| 9d. - PRIPA's Adjustable Air Valve with Ball | Fig. 4 |
| a₁ - a₄ - PRIPA's Air Intake Orifices | Fig. 3 |
| R₁ - PRIPA's One Way Air Valve | Fig. 3 |
| 10. - First Electric Generator | Fig. 1, 2 |
| 11. - Second Electric Generator | Fig. 1, 2 |
| 12. - Supplementary Air Duct for Public Use | Fig. 2 |
| 13 a-f - components of the Electric Generator Turbine of the first Electric Generator and/or of the second Electric Generator EGT (Example) Design varies | Fig. 6 |
| Note: - EGT size and design varies from case to case | Fig . 6 |

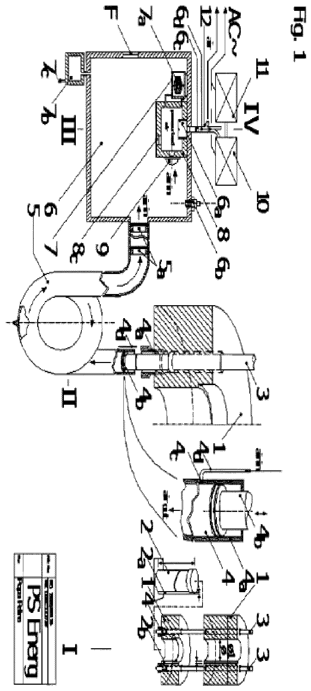

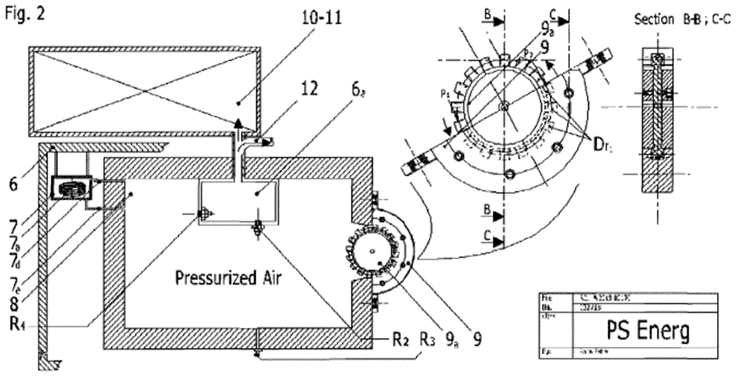

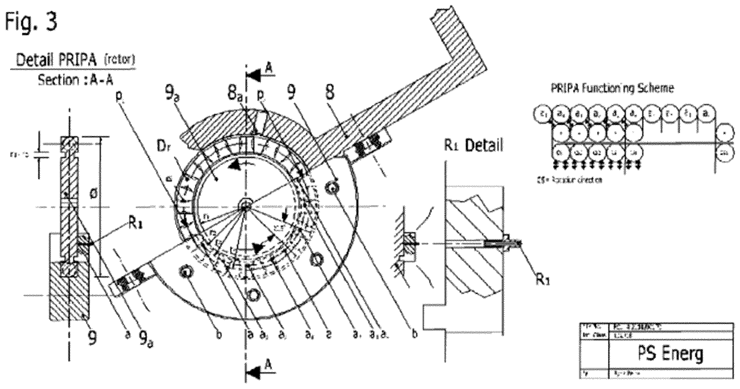

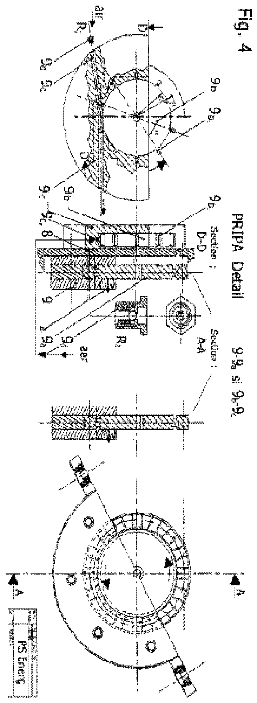

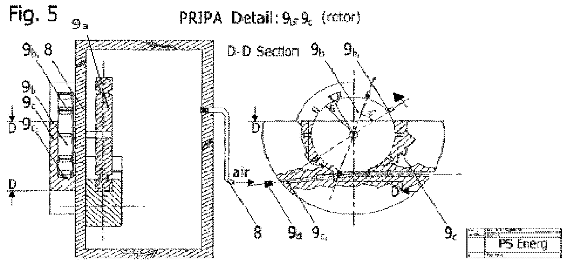

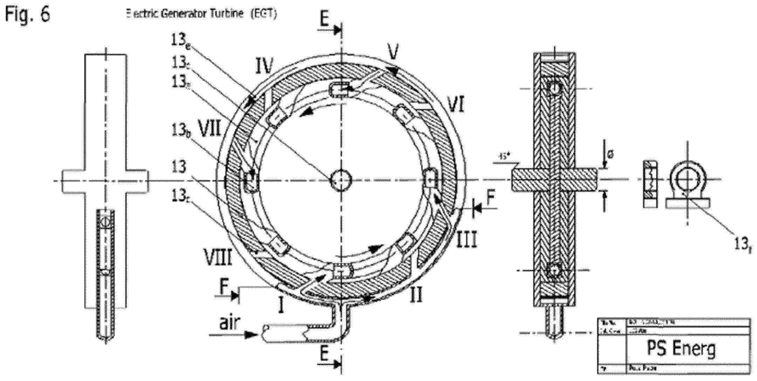

## Claims

1. A system adapted to produce electricity using pressurized air obtained from sea or oceanic waves energy, said waves in their movement towards the coastal areas activating one or more Floater Pumps (1-4) in their up/down movement, the system containing four main components (I, II, III, IV):
- a first component (I), which is mounted on a metal shaft fixed on the sea/ocean floor at a convenient distance from the shore, slope and depth of the water in relation with the waves size, the first component (I) comprising the one or more Floater Pumps (1-4) connected with a second component (II), the second component (II) consisting in a Double Spiralled Air Duct (5),
- a third component (III) comprising a General Air Reservoir (6), the General Air Reservoir (6) hosting inside:
- a Rotative Pump for High Air Pressure PRIPA (9), the Rotative Pump for High Air Pressure (9) comprising an Auxiliary Turbine (9b),
- a High Air Pressure Reservoir (8),
- an Air-Drying Chamber (7),
- a Smoothing Air Flowing Chamber (6a) connected to two Split Pressure Ducts (6d, 12), namely a Split Feeding Air Pressure Duct (6d), and a Supplementary Air Duct for Public Use (12),
- a fourth component (IV) comprising a first Electric Current Generator (10) and a second Electric Current Generator (11), the first Electric Current Generator (10) and the second Electric Current Generator (11) connected to the third component (III) through the Feeding Air Pressure Duct (6d) and the first Electric Current Generator (10) and the second Electric Current Generator (11) connected separately to the Supplementary Air Duct for Public Use (12) as a Supplementary Source of Energy, whereby the air generated and pumped by the one or more Floater Pumps (1-4), flows through the Double Spiralled Air Duct (5), said Double Spiralled Air Duct (5) comprising a first spiralled Air Duct, and a second spiralled Air Duct, the first spiralled Air Duct provided with a one way air valve mounted at the bottom of said first spiralled Air Duct at the entrance in the General Air Reservoir (6), further on, the air enters inside the General Air Reservoir (6), said General Air Reservoir (6) provided at the base with an Emptying Tank (7b), wherefrom the pressurized air enters through the Auxiliary Turbine (9b), in the High Air Pressure Reservoir (8), which is connected with the Air-Drying Chamber (7) and with the Smoothing Air Flowing Chamber (6a); then, the pressurized air outflowing from the High Air Pressure Reservoir (8) enters through the Feeding Air Pressure Duct (6d) in Air Turbines of the First Electric Generator (10) and of the Second Electric Generator (11) and enters through the Supplementary Air Duct for Public Use (12) which makes the system to function and produce electricity non-stop no matter the size of the waves.

2. The system according to Claim 1 whereby the Double Spiralled Air Duct (5) is mounted above the sea/ocean floor with the purpose that the Double Spiralled Air Duct (5) permits that particles of dirt and water be deposited inside the first spiralled Air Duct located first in the air circulation way, to be eliminated before the air enters into the General Air Reservoir (6).

3. The system according to Claim 1 whereby the system further comprises a Turbine for Air Insertion (9a) hosted inside the High Air Pressure Reservoir (8), the Turbine for Air Insertion (9a) having a common spindle with the Auxiliary Turbine (9b), and whereby the Turbine for Air Insertion (9a) is fed simultaneously from both inside and outside the High Air Pressure Reservoir (8) and from the front through a cylinder and a little invisible piston placed inside each tooth (Dn) moving back and forth which allows feeding air inside the High Air Pressure Reservoir (8), said feeding of the air being enhanced by the solidary rotation of the Turbine for Air Insertion (9a) and of the Auxiliary Turbine (9b), then the air passes through a High Air Pressure Reservoir's Orifice for air injection (R₃) and goes out of system, while the Turbine for Air Insertion (9a) is activated also by a first air pressure p₁ from a first pressure point P1 of the High Air Pressure Reservoir (8) where the first air pressure p₁ is much higher than a second air pressure p₂ from a second pressure point P₂ of the General Air Reservoir (6), making the Turbine for Air Insertion (9a) to be activated by the air pressure from three points P₁, P₂, and a third pressure point corresponding to the High Air Pressure Reservoir's Orifice for air injection R₃ having a third air pressure p₃, and makes possible the pressurized air from General Air Reservoir (6) to enter the High Air Pressure Reservoir (8) through PRIPA's Air Intake Orifices a₁-a₄, therefore by the difference of air pressures p₂+p₃ > p₁, the Rotative Pump for High Air Pressure PRIPA (9) has the capacity to increase the air pressure inside the High Air Pressure Reservoir (8) to the extent of producing high capacities of electrical power, non-stop.

4. The system according to Claim 1 whereby the Feeding Air Pressure Duct (6d) and the Supplementary Air Duct for Public Use (12) are provided with one or more of the following interchangeable devices:
Pressure Air Regulators, Pressure Relief Valves, Bleeder Pressure Valves, Air Pressure Meters, mini PRIPA pumps in order to regenerate the air pressure.

## Patentansprüche

1. System, das zur Erzeugung von Elektrizität unter Verwendung von mit Druck beaufschlagter Luft angepasst ist, die aus der Energie von Meeres- oder Ozeanwellen erzielt wird, wobei die Wellen in ihrer Bewegung in Richtung der Küstengebiete eine oder mehrere Schwimmerpumpen (1-4) in ihrer Auf-/Abwärtsbewegung aktivieren, wobei das System vier Hauptkomponenten (I, II, III, IV) enthält:
- eine erste Komponente (I), die auf einer Metallwelle montiert ist, die auf dem Meeres-/Ozeanboden in angemessener Entfernung von der Küste, mit angemessenem Gefälle und Wassertiefe in Bezug auf die Wellengröße befestigt ist, wobei die erste Komponente (I) die eine oder die mehreren Schwimmpumpen (1-4) umfasst, die mit einer zweiten Komponente (II) verbunden sind, wobei die zweite Komponente (II) aus einem Doppelspiraligen Luftkanal (5) besteht,
- eine dritte Komponente (III), die einen allgemeinen Luftbehälter (6) umfasst, wobei der allgemeine Luftbehälter (6) im Inneren Folgendes aufnimmt:
• eine Rotationspumpe für Hochdruckluft PRIPA (9), wobei die Rotationspumpe für Hochdruckluft (9) eine Hilfsturbine (9b) umfasst,
• einen Hochdruckluftspeicher (8),
• eine Lufttrocknungskammer (7),
• eine Luftströmungs-Ausgleichskammer (6a), die mit zwei geteilten Druckkanälen (6d, 12) verbunden ist, insbesondere einem geteilten Speisedruckluftkanal (6d) und einem Zusatzluftkanal für den öffentlichen Gebrauch (12),
- eine vierte Komponente (IV), die einen ersten elektrischen Stromgenerator (10) und einen zweiten elektrischen Stromgenerator (11) umfasst, wobei der erste elektrische Stromgenerator (10) und der zweite elektrische Stromgenerator (11) mit der dritten Komponente (III) über den Speisedruckluftkanal (6d) verbunden sind und der erste elektrische Stromgenerator (10) und der zweite elektrische Stromgenerator (11) separat mit dem zusätzlichen Luftkanal für den öffentlichen Gebrauch (12) als einer zusätzlichen Energiequelle verbunden sind,
wobei die von der einen oder den mehreren Schwimmerpumpen (1-4) erzeugte und gepumpte Luft durch den Doppelspiraligen Luftkanal (5) strömt, wobei der Doppelspiralige Luftkanal (5) einen ersten spiralförmigen Luftkanal und einen zweiten spiralförmigen Luftkanal umfasst, wobei der erste spiralförmige Luftkanal mit einem Einweg-Luftventil versehen ist, das am Boden des ersten spiralförmigen Luftkanals am Eingang in den allgemeinen Luftbehälter (6) montiert ist, wobei anschließend die Luft in das Innere des allgemeinen Luftbehälters (6) eintritt, wobei der allgemeine Luftbehälter (6) an der Basis einen Entleerungsbehälter (7b) bereitgestellt ist, von dem aus die mit Druck beaufschlagte Luft durch die Hilfsturbine (9b) in den Hochdruckluftbehälter (8) eintritt, der mit der Lufttrocknungskammer (7) und mit der Luftströmungs-Ausgleichskammer (6a) verbunden ist, dann tritt die aus dem Hochdruckluftbehälter (8) ausströmende mit Druck beaufschlagte Luft durch den Speisedruckluftkanal (6d) in Luftturbinen des ersten elektrischen Generators (10) und des zweiten elektrischen Generators (11) ein und tritt durch den Zusatzluftkanal für den öffentlichen Gebrauch (12) ein, wodurch das System in die Lage versetzt wird, unabhängig von der Größe der Wellen ununterbrochen zu funktionieren und Elektrizität zu erzeugen.

2. System nach Anspruch 1, wobei der Doppelspiralige Luftkanal (5) über dem Meeres-/Ozeanboden mit dem Zweck montiert ist, dass der Doppelspiralige Luftkanal (5) es zulässt, dass Partikel von Schmutz und Wasser innerhalb des ersten spiralförmigen Luftkanals abgelagert werden, der sich zuerst im Luftzirkulationsweg befindet, um entfernt zu werden, bevor die Luft in den allgemeinen Luftbehälter (6) eintritt.

3. System nach Anspruch 1, wobei das System ferner eine Lufteinführungsturbine (9a) umfasst, die im Inneren des Hochdruckluftbehälters (8) untergebracht ist, wobei die Lufteinführungsturbine (9a) eine gemeinsame Spindel mit der Hilfsturbine (9b) besitzt, und wobei die Lufteinführungsturbine (9a) gleichzeitig von innerhalb und von außerhalb des Hochdruckluftbehälters (8) und von vorne durch einen Zylinder und einen kleinen unsichtbaren Kolben gespeist wird, der sich im Inneren jedes Zahns (Dn) befindet und sich hin und her bewegt, was die Speisung von Luft in den Hochdruckluftbehälter (8) ermöglicht, wobei die Einspeisung von Luft durch die integrale Drehung der Lufteinführungsturbine (9a) und der Hilfsturbine (9b) verstärkt wird, die Luft dann durch eine Luftinjektionsöffnung (R₃) eines Hochdruckluftbehälters strömt und aus dem System austritt, während die Lufteinführungsturbine (9a) ebenfalls durch einen ersten Luftdruck p₁ von einem ersten Druckpunkt P₁ des Hochdruckluftbehälters (8) aktiviert wird, wobei der erste Luftdruck p₁ viel höher ist als ein zweiter Luftdruck p₂ von einem zweiten Druckpunkt P₂ des allgemeinen Luftbehälters (6), wodurch die Lufteinführungsturbine (9a) durch den Luftdruck von drei Punkten P₁, P₂ und einem dritten Druckpunkt aktiviert wird, welcher der Luftinjektionsöffnung R₃ des Hochdruckluftbehälters entspricht, die einen dritten Luftdruck p₃ aufweist, und wodurch es ermöglicht wird, dass die mit Druck beaufschlagte Luft aus dem allgemeinen Luftbehälter (6) durch die Lufteinlassöffnungen a₁-a₄ der PRIPA in den Hochdruckluftbehälter (8) eintritt, somit besitzt die rotierende Hochdruckpumpe PRIPA (9) durch den Unterschied der Luftdrücke p₂+p₃>p₁ die Fähigkeit, den Luftdruck innerhalb des Hochdruckluftbehälters (8) in dem Umfang zu erhöhen, dass sie ohne Unterbrechung hohe Kapazitäten an elektrischer Energie erzeugen kann.

4. System nach Anspruch 1, wobei der Speisedruckluftkanal (6d) und der Zusatzluftkanal für den öffentlichen Gebrauch (12) mit einem oder mehreren der folgenden austauschbaren Vorrichtungen versehen sind:
Druckluftreglern, Druckablassventilen, Entlüftungsventilen, Luftdruckmessern, Mini-PRIPA-Pumpen, um den Luftdruck wiederherzustellen.

## Revendications

1. Système adapté à la production d'électricité en utilisant de l'air sous pression obtenu grâce à l'énergie des vagues marines ou océaniques, lesdites vagues activant, lors de leur avancée vers les zones côtières, une ou plusieurs pompes à flotteur (1-4) lors de leur mouvement de montée/descente, le système contenant quatre composants principaux (I, II, III, IV) :
- un premier composant (I) qui est monté sur une tige métallique fixée sur le fond marin à une distance appropriée de la grève, avec une pente et une profondeur d'eau appropriées par rapport à la taille des vagues, le premier composant (I) comprenant les une ou plusieurs pompes à flotteur (1-4) raccordées à un deuxième composant (II), le deuxième composant (II) consistant en une conduite d'air hélicoïdale double (5),
- un troisième composant (III) comprenant un réservoir d'air général (6), le réservoir d'air général (6) renfermant :
• une pompe rotative pour haute pression d'air PRIPA (9), la pompe rotative pour haute pression d'air (9) comprenant une turbine auxiliaire (9b),
• un réservoir de haute pression d'air (8),
• une chambre de séchage d'air (7),
• une chambre d'uniformisation de flux d'air (6a) raccordée à deux conduites de pression ramifiées (6d, 12), à savoir une conduite d'alimentation en pression d'air ramifiée (6d) et une conduite d'air supplémentaire à usage public (12),
- un quatrième composant (IV) comprenant un premier générateur de courant électrique (10) et un deuxième générateur de courant électrique (11), le premier générateur de courant électrique (10) et le deuxième générateur de courant électrique (11) étant raccordés au troisième composant (III) par la conduite d'alimentation en pression d'air (6d), et le premier générateur de courant électrique (10) et le deuxième générateur de courant électrique (11) étant raccordés séparément à la conduite d'air supplémentaire à usage public (12) servant de source d'énergie supplémentaire,
dans lequel l'air généré et pompé par les une ou plusieurs pompes à flotteur (1-4) passe par la conduite d'air hélicoïdale double (5), ladite conduite d'air hélicoïdale double (5) comprenant une première conduite d'air hélicoïdale et une deuxième conduite d'air hélicoïdale, la première conduite d'air hélicoïdale étant dotée d'un clapet antiretour d'air monté en bas de la première conduite d'air hélicoïdale à l'entrée du réservoir d'air général (6), puis plus avant l'air pénètre dans le réservoir d'air général (6), ledit réservoir d'air général (6) étant fourni avec, à sa base, un réservoir de vidange (7b) à partir duquel l'air sous pression pénètre, en passant par la turbine auxiliaire (9b), dans le réservoir de haute pression d'air (8) qui est raccordé à la chambre de séchage d'air (7) et à la chambre d'uniformisation de flux d'air (6a), puis l'air sous pression sortant du réservoir de haute pression d'air (8) pénètre, en passant dans la conduite d'alimentation en pression d'air (6d), dans des turbines à air du premier générateur électrique (10) et du deuxième générateur électrique (11) et s'écoule dans la conduite d'air supplémentaire à usage public (12), ce qui permet au système de fonctionner et de produire de l'électricité en continu quelle que soit la taille des vagues.

2. Système selon la revendication 1, dans lequel la conduite d'air hélicoïdale double (5) est montée au-dessus du fond marin avec pour effet que la conduite d'air hélicoïdale double (5) permette à des particules de saleté et à de l'eau de se déposer dans la première conduite d'air hélicoïdale située en amont dans le sens de circulation de l'air, en vue de leur élimination avant que l'air pénètre dans le réservoir d'air général (6).

3. Système selon la revendication 1, comprenant en outre une turbine d'introduction d'air (9a) logeant dans le réservoir de haute pression d'air (8), la turbine d'introduction d'air (9a) possédant un arbre commun avec la turbine auxiliaire (9b), dans lequel la turbine d'introduction d'air (9a) est alimentée simultanément par l'intérieur et l'extérieur du réservoir de haute pression d'air (8) ainsi que par l'avant par le biais d'un cylindre et d'un petit piston invisible placé à l'intérieur de chaque dent (Dn) et subissant un mouvement de va-et-vient permettant l'apport d'air dans le réservoir de haute pression d'air (8), ledit apport d'air étant renforcé par la rotation solidaire de la turbine d'introduction d'air (9a) et de la turbine auxiliaire (9b), puis l'air passe par un orifice du réservoir de haute pression d'air servant à l'injection d'air (R₃) et sort du système, tandis que la turbine d'introduction d'air (9a) est activée également par une première pression d'air p₁ provenant d'un premier point de pression P₁ du réservoir de haute pression d'air (8) dans lequel la première pression d'air p₁ est bien supérieure à une deuxième pression d'air p₂ provenant d'un deuxième point de pression P₂ du réservoir d'air général (6), provoquant l'activation de la turbine d'introduction d'air (9a) par la pression d'air provenant de trois points P₁, P₂ et un troisième point de pression correspondant à l'orifice du réservoir de haute pression d'air servant à l'injection d'air R₃ présentant une troisième pression d'air p₃, et permettant à l'air sous pression issu du réservoir d'air général (6) de pénétrer dans le réservoir de haute pression d'air (8) en passant par les orifices d'entrée d'air a₁-a₄ de la PRIPA, ainsi, moyennant les différences de pression d'air p₂+p₃>p₁, la pompe rotative pour haute pression d'air PRIPA (9) est capable d'élever la pression d'air régnant dans le réservoir de haute pression d'air (8) dans une mesure permettant de produire en continu de hautes capacités d'énergie électrique.

4. Système selon la revendication 1, dans lequel la conduite d'alimentation en pression d'air (6d) et la conduite d'air supplémentaire à usage public (12) sont dotées d'un ou plusieurs des dispositifs interchangeables suivants :
régulateurs de pression d'air, clapets de détente, robinets de purge, manomètres, pompes PRIPA miniaturisées, pour régénérer la pression d'air.
